# FASCICULE DE BREVET EUROPEEN

(11) **EP 1 616 456 B1**
(45) Date de publication et mention de la délivrance du brevet: **21.02.2007**
(21) Numéro de dépôt: 04742841.2
(22) Date de dépôt: 09.04.2004
(51) Int. Cl.: H04R 7/04, G03B 21/56, H04R 5/02

(54) **INSTALLATION POUR LA PROJECTION D'OEUVRES CINEMATOGRAPHIQUES OU NUMERIQUES SONORES**
SYSTEM ZUR PROJEKTION CINEMATOGRAPHISCHER WERKE ODER DIGITALER WERKE MIT TON
SYSTEM FOR THE PROJECTION OF CINEMATOGRAPHIC WORKS OR DIGITIAL WORKS WITH SOUND

(30) Priorité: 11.04.2003 FR 0304562
(43) Date de publication de la demande: 18.01.2006
(73) Titulaire: Vincent, Pierre, 78920 Ecquevilly (FR); Brabec, Maximilien, 56870 Larmor Baden (FR)
(72) Inventeur: VINCENT, Pierre, F-78920 ECQUEVILLY (FR)
(74) Mandataire: Breese Derambure Majerowicz
(86) Numéro de dépôt international: PCT/FR2004/050154
(87) Numéro de publication internationale: WO 2004/093492

(56) Documents cités:
- US-A- 5 025 474
- US-A- 5 993 006
- US-A1- 2002 118 847
- US-B1- 6 389 935

## Description

La présente invention concerne une installation pour la projection d'oeuvres cinématographiques ou numériques sonores, et plus particulièrement de tels films à au moins un canal son, ladite installation comprenant un écran, et pour ledit canal son, au moins un haut-parleur basse et au moins un haut-parleur médium/aigu.

Dans ce qui suit, on entendra par canal son uniquement les canaux écran, à l'exclusion des canaux d'ambiance qui, dans l'invention, sont traités de façon conventionnelle.

Les canaux écrans sont généralement au nombre de trois, un canal gauche, un canal central et un canal droit. Il existe également des installations à cinq canaux incluant un canal intermédiaire gauche et un canal intermédiaire droit.

Il existe enfin des installations à écran géant à quatre canaux, dont deux canaux latéraux ainsi qu'un canal central haut et un canal central bas.

Dans les installations conventionnelles, chaque canal comporte deux ou trois haut-parleurs, à savoir, dans tous les cas, un haut-parleur basse et, soit un haut-parleur médium/aigu, soit un haut-parleur médium et un haut-parleur aigu. Les haut-parleurs médium/aigu, médium et aigu sont généralement des haut-parleurs pavillonnaires. Ces haut-parleurs sont disposés derrière l'écran.

Du fait de cette disposition, on est amené à utiliser des écrans perforés, réalisés à partir d'une feuille de PVC munie de perforations ou de microperforations. En effet, si un écran non perforé laisse passer sans difficulté les sons graves, il provoque une atténuation inacceptable des médiums, des aigus et des extrêmes aigus.

Mais les écrans perforés conservent un certain nombre d'inconvénients sur le plan du son et dégradent également la qualité de l'image. Du point de vue sonore, l'écran perforé introduit un effet de masque et des perturbations dues à la diffusion des ondes sonores au passage des perforations. Du point de vue de l'image, les perforations nuisent notamment à la luminosité, aux contrastes et à la définition. De plus, dans les premiers rangs de la salle de projection, les perforations sont visibles sous la forme d'une trame.

On a déjà proposé dans le document US-A-5 025 474 d'utiliser un écran de projection comme membrane acoustique directement entraînée par des actionneurs magnétiques. Toutefois, un tel agencement n'est envisageable que pour de faibles dimensions d'écran. En outre, les médiums et les aigus ne sauraient être convenablement reproduits à l'aide de ce système.

On a par ailleurs proposé dans les documents US-A-5 004 067 et US-A-5 109 423 d'utiliser un écran non perforé et de placer des haut-parleurs médiums/aigus pavillonnaires au-dessus de l'écran. Cet agencement présente le grave inconvénient de déplacer totalement vers le haut l'image sonore, en dehors de l'écran pour l'essentiel.

La présente invention vise à pallier ces inconvénients.

Plus particulièrement, l'invention a pour but de fournir une installation de projection qui présente la qualité d'image d'un écran non perforé tout en assurant pour le son une nette amélioration de qualité ainsi qu'une excellente conformité aux normes en vigueur (en particulier la norme ISO 2969 Courbe X) et au mixage voulu par le réalisateur sur le plan artistique.

A cet effet, l'invention a pour objet une installation pour la projection d'oeuvres cinématographiques ou numériques sonores à au moins un canal son, comprenant un écran et, pour ledit canal son, au moins un haut-parleur basse et au moins un haut-parleur médium/aigu, dans laquelle :
- l'écran est un écran non perforé ;
- le haut-parleur médium/aigu est un transducteur sonore plan plaqué contre l'écran à l'arrière de ce dernier par rapport à la direction de projection ; et
- un haut-parleur extrême aigu est disposé à la périphérie de l'écran.

On a en effet pu constater que, sous réserve d'utiliser pour les médiums et les aigus un ou des transducteurs sonores plans et de les plaquer contre l'écran, les vibrations de cette gamme de fréquence étaient convenablement transmises passivement par l'écran, permettant l'adaptation d'impédance sonore devant l'écran.

Seuls les extrêmes aigus ne sont pas convenablement transmis par l'écran (problèmes de directivité et de spacialisation des sons dans la salle), aussi utilise-t-on pour cette gamme de fréquences des haut-parleurs situés en périphérie de l'écran. Ceci ne présente pas de gêne dans la mesure où l'oreille humaine est peu sensible à la localisation des sources extrêmes aiguës.

Dans un mode de réalisation particulier de l'invention, ledit transducteur médium/aigu est disposé sensiblement au-dessus du haut-parleur basse.

Egalement dans un mode de réalisation particulier, le haut-parleur extrême aigu est disposé au-dessus de l'écran, sensiblement au-dessus du transducteur médium/aigu.

Dans le cas d'une Installation destinée à la projection de films cinématographiques sonores multicanaux, ledit au moins un canal son comportant au moins deux canaux latéraux, les haut-parleurs extrêmes aigus desdits canaux latéraux peuvent être disposés sur chacun des côtés de l'écran.

Plus particulièrement, les haut-parleurs extrêmes aigus desdits canaux latéraux peuvent être disposés sensiblement à la hauteur des transducteurs médium/aigu des canaux correspondants.

Dans un autre mode de réalisation, les haut-parleurs extrêmes aigus desdits canaux latéraux sont disposés au-dessus de l'écran.

Plus particulièrement, ces haut-parleurs-extrêmes aigus desdits canaux latéraux peuvent être disposés sensiblement au-dessus des transducteurs médium/aigu des canaux correspondants.

Dans le cas d'une installation destinée à la projection de films cinématographiques à quatre canaux, ledit au moins un canal son comportant deux canaux latéraux, un canal central haut et un canal central bas, le haut-parleur extrême aigu dudit canal central haut peut être disposé au-dessus de l'écran, et le haut-parleur extrême aigu dudit canal central bas être disposé au-dessous de l'écran.

Les haut-parleurs graves précités peuvent être agencés pour passer les sons d'une fréquence inférieure à environ 300 Hz à 800 Hz.

Les haut-parleurs extrêmes aigus précités peuvent être agencés pour passer les sons d'une fréquence supérieure à environ 3 kHz à 5 kHz.

On décrira maintenant à titre d'exemple non limitatif des modes de réalisation particuliers de l'invention en référence aux dessins schématiques annexés dans lesquels :
- la figure 1 est une vue en coupe verticale perpendiculairement à l'écran d'un salle de cinéma équipée d'une installation selon l'invention ;
- la figure 2 est une vue de face d'une installation selon un premier mode de réalisation de l'invention ;
- la figure 3 est une vue de face d'une installation selon un deuxième mode de réalisation de l'invention ; et
- la figure 4 est une vue de face d'une installation selon un troisième mode de réalisation de l'invention

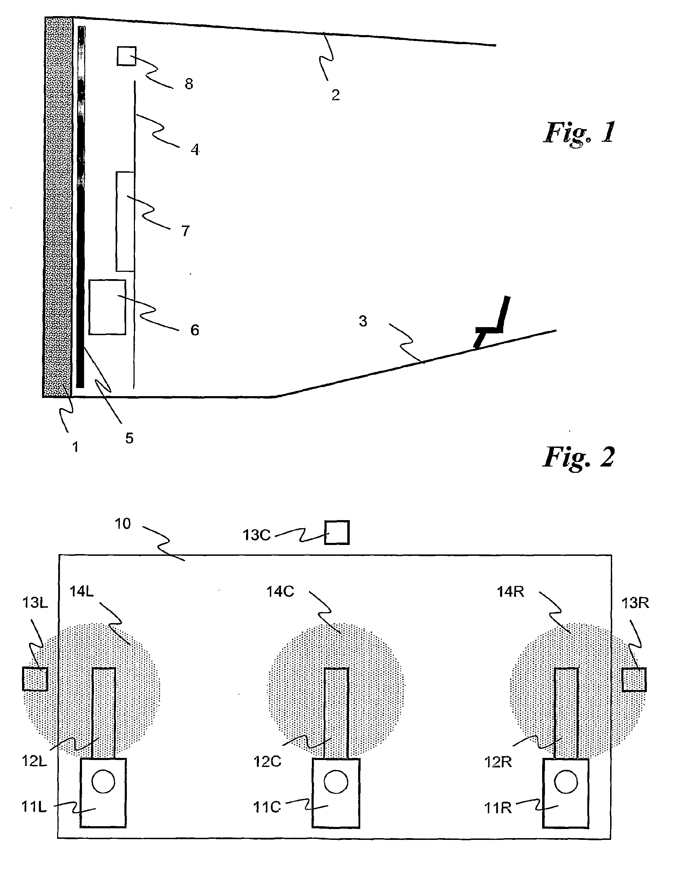

On voit à la figure 1 une salle de cinéma délimitée en coupe par un mur de fond 1, un plafond 2 et un plancher 3.

L'écran 4, non perforé, est disposé à une certaine distance du mur de fond 1. Une plaque 5 de matériau absorbant acoustique est disposée contre le mur 1 du côté de l'écran 4 pour amortir les réflexions sonores, essentiellement dans la gamme de fréquence bas/médium.

Un haut-parleur de basse 6 est disposé entre l'écran 4 et le panneau 5 vers le bas de l'écran, ce haut-parleur étant susceptible de passer les sons d'une fréquence inférieure à environ 500 Hz.

Un haut-parleur médium/aigu 7 susceptible de passer les sons dans une gamme d'environ 500 Hz - 4 kHz est disposé au-dessus du haut-parleur basse 6.

Un haut-parleur extrême aigu 8 est disposé au-dessus de la périphérie de l'écran, au- dessus des haut-parleurs 6 et 7, ce haut-parleur étant susceptible de passer les sons d'une fréquence supérieure à environ 4 kHz.

Le haut-parleur 7 est un transducteur sonore plan dont la face active est plaquée contre l'écran 4.

Dans ce qui vient d'être décrit, les haut-parleurs 6 et 8 et le transducteur plan 7 appartiennent au même canal.

On décrira maintenant, en référence aux vues de face des figures 2, 3 et 4 la disposition des haut-parleurs dans des plans parallèles aux plans de l'écran 4 et du mur 1.

On voit à la figure 2 un écran 10 de format du type dit «panneau» (également dénommé panneau 1.85, soit un rapport d'image de 1/1,85).

Les canaux gauche, central et droit comportent chacun un haut-parleur basse, respectivement 11 L, 11C et 11 R, un transducteur plan médium/aigu, respectivement 12L, 12C et 12R, et un haut-parleur extrême aigu, respectivement 13L 13C et 13R.

Le haut-parleur central 13C d'extrême aigu est placé au-dessus de l'écran, comme le haut-parleur 8 de la figure 1.

En revanche, les haut-parleurs latéraux d'extrême aigu 13L et 13R sont ici placés latéralement chacun sur un côté de l'écran, à l'extérieur de l'écran, sensiblement à la hauteur des transducteurs latéraux médium/aigu, dans l'exemple représenté sensiblement à mi-hauteur de l'écran 10.

Du fait du recouvrement inévitable des bandes passantes des transducteurs médium/aigu et des haut-parleurs extrême aigu, on voit sur la figure 2 que les images sonores 14L et 14R des transducteurs médium/aigu latéraux 12 L et 12R sont légèrement déplacés vers l'extérieur de l'écran, ce qui permet d'agrandir l'espace sonore. De même l'image sonore 14C du transducteur médium/aigu central 12C est légèrement déplacée vers le haut. Cette dernière image sonore 14C se trouve en fait idéalement placée en hauteur puisque c'est très souvent dans cette bande de hauteur que se situent les dialogues.

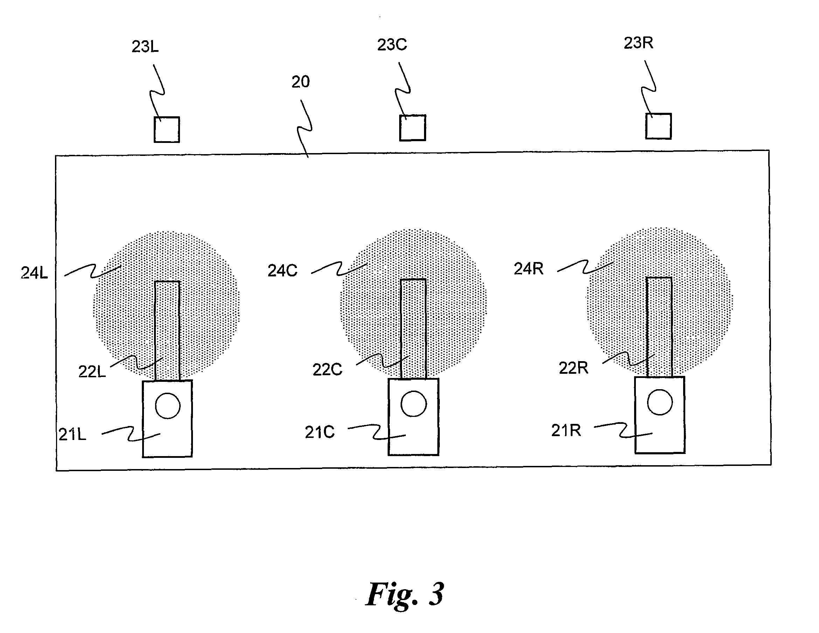

Dans la figure 3, l'écran 20 du type dit « Scope » (également dénommé Scope 2.39, soit un rapport d'image de 1/2,39) est plus allongé dans le sens horizontal que l'écran panneau de la figure 2. Les haut-parleurs basse et les transducteurs médium/aigu ont reçu sur cette figure les mêmes références que sur la figure 2 augmentées de 10. Leur disposition est sensiblement la même que dans cette figure 2.

En revanche, si le haut-parleur d'extrême aigu central 23C est disposé comme le haut-parleur 13C au-dessus de l'écran sensiblement aligné avec le haut-parleur basse et le transducteur médium/aigu du canal central, les haut-parleurs d'extrême aigu latéraux 23L et 23R sont disposés au-dessus de l'écran, au-dessus des haut-parleurs 21 et 22 du canal latéral correspondant.

Dans ces conditions les images sonores 24L et 24R des transducteurs médium/aigu des canaux latéraux sont légèrement déplacées vers le haut de la même manière que l'image sonore 24C du canal central.

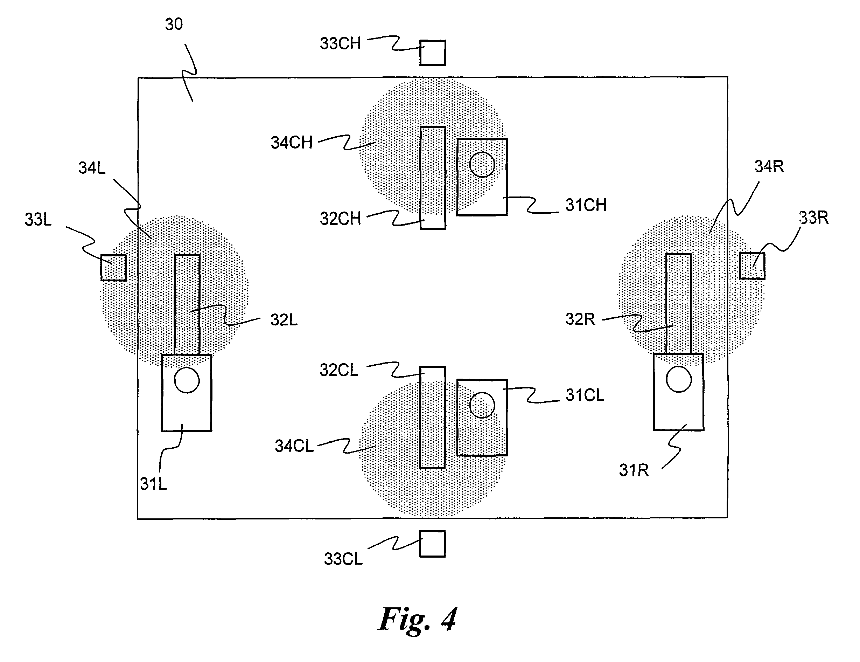

La figure 4 représente une installation à écran géant 30 et quatre canaux dont un canal latéral gauche, un canal latéral droit et deux canaux centraux haut et bas. Les haut-parleurs basse et extrême aigu ainsi que les transducteurs plans médium/aigu des deux canaux latéraux ont reçu sur cette figure les mêmes références que sur la figure 2 augmentées de 20. Leur disposition est sensiblement la même que dans cette figure 2.

Le canal central haut est composé d'un haut-parleur de basse 31 CH, d'un transducteur sonore plan médium/aigu 32CH et d'un haut-parleur extrême aigu 33CH. Le haut-parleur 31 CH et le transducteur 32CH sont disposés côte à côte derrière l'écran, vers le haut de ce dernier. Le haut-parleur 33CH est disposé au-dessus de l'écran, sensiblement au-dessus du haut-parleur 31 CH et du transducteur 32CH.

De même, le canal central bas est composé d'un haut-parleur de basse 31CL, d'un transducteur sonore plan médium/aigu 32CL et d'un haut-parleur extrême aigu 33CL. Le haut-parleur 31 CL et le transducteur 32CL sont disposés côte à côte derrière l'écran, vers le bas de ce dernier. Le haut-parleur 33CL est disposé au-dessous de l'écran, sensiblement au-dessous du haut-parleur 31 CL et du transducteur 32CL.

On voit également sur cette figure l'image sonore 34CH du transducteur 32CH, légèrement décalée vers le haut par rapport à ce dernier, et l'image sonore 34CL du transducteur 32CL, légèrement décalée vers le bas par rapport à ce dernier.

## Revendications

1. - Installation pour la projection d'oeuvres cinématographiques ou numériques sonores à au moins un canal son, comprenant un écran (4 ; 10 ; 20 ; 30) et, pour ledit canal son, au moins un haut-parleur basse (6 ; 11L, 11C, 11R ; 21 L, 21C, 21 R ; 31 L, 31 CH, 31CL, 31R) et au moins un haut-parleur médium/aigu (7 ; 12L, 12C, 12R ; 22L, 22C, 22R ; 32L, 32CH, 32CL, 32R), **caractérisée en ce que** :
- l'écran est un écran non perforé ;
- le haut-parleur médium/aigu est un transducteur sonore plan plaqué contre l'écran à l'arrière de ce dernier par rapport à la direction de projection ; et
- un haut-parleur extrême aigu (8 ; 13L, 13C, 13R ; 23L, 23C, 23R ; 33L, 33CH, 33CL, 33R) est disposé à la périphérie de l'écran.

2. - Installation selon la revendication 1, dans laquelle ledit transducteur médium/aigu est disposé sensiblement au-dessus du haut-parleur basse.

3. - Installation selon l'une quelconque des revendications 1 et 2, dans laquelle le haut-parleur extrême aigu est disposé au-dessus de l'écran, sensiblement au-dessus du transducteur médium/aigu.

4. - Installation selon l'une quelconque des revendications 1 à 3 pour la projection d'oeuvres cinématographiques ou numériques sonores multicanaux ledit au moins un canal son, comportant au moins deux canaux latéraux, dans laquelle les haut-parleurs extrême aigu (13L, 13R ; 33L, 33R) desdits canaux latéraux sont disposés sur chacun des côtés de l'écran.

5. - Installation selon la revendication 4, dans laquelle les haut-parleurs extrême aigu desdits canaux latéraux sont disposés sensiblement à la hauteur des transducteurs plans médium/aigu des canaux correspondants.

6. - Installation selon l'une quelconque des revendications 1 à 3 pour la projection d'oeuvres cinématographiques ou numériques sonores multicanaux ledit au moins un canal son, comportant deux canaux latéraux, dans laquelle les haut-parleurs extrême aigu (23L, 23R) desdits canaux latéraux sont disposés au-dessus de l'écran.

7. - Installation selon la revendication 6, dans laquelle les haut-parleurs extrême aigu desdits canaux latéraux sont disposés sensiblement au-dessus des transducteurs plans médium/aigu des canaux correspondants.

8. - Installation selon l'une quelconque des revendications 1 à 7 pour la projection d'oeuvres cinématographiques ou numériques sonores à quatre canaux, ledit au moins un canal son comportant deux canaux latéraux, un canal central haut et un canal central bas, dans laquelle le haut-parleur extrême aigu (33CH) dudit canal central haut est disposé au-dessus de l'écran, et le haut-parleur extrême aigu (33CL) dudit canal central bas est disposé au-dessous de l'écran.

9. - Installation selon l'une quelconque des revendications 1 à 8, dans laquelle le(s) haut-parleur(s) grave est (sont) agencé(s) pour passer les sons d'une fréquence inférieure à environ 300 Hz à 800 Hz.

10. - Installation selon l'une quelconque des revendications 1 à 9, dans laquelle le(s) haut-parleur(s) extrême aigu est (sont) agencé(s) pour passer les sons d'une fréquence supérieure à environ 3 kHz à 5 kHz.

## Claims

1. System for the projection of cinematographic works or digital sound works with at least one sound channel, comprising a screen (4; 10; 20; 30) and, for said sound channel, at least one woofer (6; 11L, 11C, 11R; 21L, 21C, 21R; 31L, 31CH, 31CL, 31R) and at least one medium/treble speaker (7; 12L, 12C, 12R; 22L, 22C, 22R; 32L, 32CH, 32CL, 32R), **characterised in that**:
- the screen is a non-perforated screen;
- the medium/treble speaker is a flat sound transducer placed against the screen to the rear thereof in relation to the direction of projection; and
- an extreme treble speaker (8; 13L, 13C, 13R; 23L, 23C, 23R; 33L, 33CH, 33CL, 33R) is disposed on the periphery of the screen.

2. System according to claim 1, wherein said medium/treble transducer is disposed substantially above the woofer.

3. System according to either one of the claims 1 and 2, wherein the extreme treble speaker is disposed above the screen, substantially above the medium/treble transducer.

4. System according to any one of the claims from 1 to 3 for the projection of cinematographic works or multi-channel digital sound works, said at least one sound channel comprising at least two lateral channels, wherein the extreme treble speakers (13L, 13R; 33L, 33R) of said lateral channels are disposed on either side of the screen.

5. System according to claim 4, wherein the extreme treble speakers of said lateral channels are disposed substantially at the height of the flat medium/treble transducers of the corresponding channels.

6. System according to any one of the channels from 1 to 3 for the projection of cinematographic works or multi-channel digital sound works, said at least one sound channel comprising two lateral channels, wherein the extreme treble speakers (23L, 23R) of said lateral channels are disposed above the screen.

7. System according to claim 6, wherein the extreme treble speakers of said lateral channels are disposed substantially above the flat medium/treble transducers of the corresponding channels.

8. System according to any one of the claims from 1 to 7 for the projection of cinematographic works or four-channel digital sound works, said at least one sound channel comprising two lateral channels, a central-high channel and a central-low channel, wherein the extreme treble speaker (33CH) of said central-high channel is disposed above the screen, and the extreme treble speaker (33CL) of said central-low channel is disposed below the screen.

9. System according to any one of the claims from 1 to 8, wherein the woofer(s) is(are) arranged to produce sounds with a frequency that is lower than around 300 Hz to 800 Hz.

10. System according to any one of the claims from 1 to 9, wherein the extreme treble speaker(s) is(are) arranged to transmit sounds with a frequency that is higher than around 3 kHz to 5 kHz.

## Patentansprüche

1. - Einrichtung für die Projektion von Film- oder digitalen Tonwerken mit mindestens einem Tonkanal, die einen Bildschirm (4, 10, 20, 30) umfaßt und für den besagten Tonkanal mindestens einen Baßlautsprecher (6, 11L, 11C, 11R, 21L, 21C, 21R, 31L, 31CH, 31CL, 31R) und mindestens einen Lautsprecher für mittlere/höhere Frequenzen (7, 12L, 12C, 12R, 22L, 22C, 22R, 32L, 32CH, 32CL, 32R), **dadurch gekennzeichnet, daß**:
- der Bildschirm ein nicht perforierter Bildschirm ist;
- der Lautsprecher für mittlere/höhere Frequenzen ein ebener Tonwandler ist, der an den Bildschirm an dessen Rückseite im Verhältnis zur Projektionsrichtung plattiert ist;
- ein Lautsprecher für extrem hohe Frequenzen (8, 13L, 13C, 13R, 23L, 23C, 23R, 33L, 33CH, 33CL, 33R) an der Peripherie des Bildschirms angeordnet ist.

2. - Einrichtung nach Anspruch 1, in der der besagte Tonwandler für mittlere/höhere Frequenzen in etwa über dem Baßlautsprecher angeordnet ist.

3. - Einrichtung nach einem beliebigen der vorstehenden Ansprüche 1 und 2, in der der Lautsprecher für extrem hohe Frequenzen über dem Bildschirm in etwa über dem Tonwandler für mittlere/höhere Frequenzen angeordnet ist.

4. - Einrichtung nach einem beliebigen der vorstehenden Ansprüche 1 bis 3 für die Projektion von Film- oder digitalen Mehrkanal-Tonwerken, der besagte mindestens eine Tonkanal, die mindestens zwei seitliche Kanäle umfaßt, in der die Lautsprecher für extrem hohe Frequenzen (13L, 13R, 33L, 33R) der besagten seitlichen Kanäle beidseitig des Bildschirms angeordnet sind.

5. - Einrichtung nach Anspruch 4, in der die Lautsprecher für extrem hohe Frequenzen der besagten seitlichen Kanäle in etwa auf der Höhe der ebenen Tonwandler für mittlere/höhere Frequenzen der entsprechenden Kanäle angeordnet sind.

6. - Einrichtung nach einem beliebigen der vorstehenden Ansprüche 1 bis 3 für die Projektion von Film- oder digitalen Mehrkanal-Tonwerken, wobei der besagte mindestens eine Tonkanal zwei seitliche Kanäle umfaßt, in der die Lautsprecher für extrem hohe Frequenzen (23L, 23R) der besagten seitlichen Kanäle über dem Bildschirm angeordnet sind.

7. - Einrichtung nach Anspruch 6, in der die Lautsprecher für extrem hohe Frequenzen der besagten seitlichen Kanäle in etwa über den ebenen Tonwandlern für mittlere/höhere Frequenzen der entsprechenden Kanäle angeordnet sind.

8. - Einrichtung nach einem beliebigen der vorstehenden Ansprüche 1 bis 7 für die Projektion von Film- oder digitalen Vierkanal-Tonwerken, wobei der besagte mindestens eine Tonkanal zwei seitliche Kanäle umfaßt, einen oberen zentralen Kanal und einen unteren zentralen Kanal, in der der Lautsprecher für extrem hohe Frequenzen (33CH) des besagten oberen zentralen Kanals über dem Bildschirm angeordnet ist, und der Lautsprecher für extrem hohe Frequenzen (33CL) des besagten unteren zentralen Kanals unter dem Bildschirm angeordnet ist.

9. - Einrichtung nach einem beliebigen der vorstehenden Ansprüche 1 bis 8, in der der/die Lautsprecher für tiefe Töne gestaltet ist/sind, daß er/sie die Töne mit einer Frequenz von unter circa 300 Hz bis 800 Hz abgibt/abgeben.

10. - Einrichtung nach einem beliebigen der vorstehenden Ansprüche 1 bis 9, in der der/die Lautsprecher für extrem hohe Frequenzen gestaltet ist/sind, daß er/sie die Töne mit einer Frequenz von über circa 3 kHz bis 5 kHz abgibt/abgeben.
